(19) Europäisches Patentamt
European Patent Office
Office européen des brevets

(11) Veröffentlichungsnummer : **0 032 106**
**B1**

# (12) EUROPÄISCHE PATENTSCHRIFT

(45) Veröffentlichungstag der Patentschrift : **01.06.83**

(51) Int. Cl.³ : **C 07 F 7/22**, C 08 K 5/58, C 08 L 27/06

(21) Anmeldenummer : **80810371.7**

(22) Anmeldetag : **01.12.80**

## (54) Gemische von n-Octylzinn-Verbindungen, Verfahren zu ihrer Herstellung und ihre Verwendung als Stabilisatoren für halogenhaltige Thermoplaste.

(30) Priorität : **07.12.79 CH 10870/79**

(43) Veröffentlichungstag der Anmeldung : **15.07.81 Patentblatt 81/28**

(45) Bekanntmachung des Hinweises auf die Patenterteilung : **01.06.83 Patentblatt 83/22**

(84) Benannte Vertragsstaaten : **DE FR GB IT NL**

(56) Entgegenhaltungen :
**FR A 2 109 945**
**FR A 2 171 963**
**GB A 1 510 974**

(73) Patentinhaber : **CIBA-GEIGY AG**
**Patentabteilung Postfach**
**CH-4002 Basel (CH)**

(72) Erfinder : **Abeler, Gerd, Dr.**
**Alter Wixhäuser Weg 61**
**D-6100 Darmstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 032 106 B1

# Gemische von n-Octylzinn-Verbindungen, Verfahren zu ihrer Herstellung und ihre Verwendung als Stabilisatoren für halogenhaltige Thermoplaste

Die Erfindung betrifft neue Organozinnstabilisatoren, ihre Herstellung, ihre Verwendung sowie das mit ihnen stabilisierte PVC.

Organozinnverbindungen werden seit langem als wertvolle Stabilisatoren für Polyvinylchlorid (PVC) verwendet. So ist aus der GB-PS 1 494 771 das n-Octyl-zinn-tris-(tetradecyl-thioglycollat) als PVC-Stabilisator bekannt, das gemäss Beispiel 1 aus 91 % Octylzinnoxid and 9 % Dioctylzinnoxid hergestellt wird, also einen geringen Anteil der entsprechenden Dioctylzinn-Verbindung enthält.

Es hat sich gezeigt, dass diese bekannten PVC-Stabilisatoren nicht in allen Fällen den Anforderungen der Praxis genügen. So werden im praktischen Einsatz vielfach weitere Stabilisatoren und/oder Hilfsmittel neben dem jeweiligen Organozinn-Stabilisator verwendet, die sich oftmals gegenseitig nachteilig beeinflussen. Insbesondere bei der weitgehend üblichen Mit-Verwendung von Gleitmitteln zeigt sich bei den bekannten PVC-Stabilisatoren ein nachteiliger Einfluss auf die Wirksamkeit. Beispielsweise zeigt der oben genannte Octylzinn-Stabilisator einen deutlichen negativen Einfluss aufgrund von mitverwendetem Glycerinmonooleat-Gleitmittel, das im Handel z. B. als Loxiol® G 10 erhältlich ist.

Aufgabe der Erfindung war es, PVC-Stabilisatoren zu schaffen, die diese Nachteile nicht oder nur in geringerem Ausmass zeigen, die insbesondere weniger stark durch mitverwendete Gleitmittel beeinträchtigt werden.

Die Erfindung betrifft Gemische von n-Octylzinn-Verbindungen (I) und (II)

$$n\text{-}C_8H_{17}Sn(SCH_2COOR)_3 \qquad (I)$$

$$(n\text{-}C_8H_{17})_2Sn(SCH_2COOR)_2 \qquad (II),$$

worin R Alkyl mit 10-16 C-Atomen ist, und das Molverhältnis (I) zu (II) ein Wert von 1 bis 3 ist.

Alkylreste R sind insbesondere geradkettig und bevorzugt solche mit 12 und/oder 14 C-Atomen, wobei im Fall von Mischungen von $C_{12}$ und $C_{14}$ in den Endstoffen (I) und (II) bevorzugt mindestens 60 Mol.-% $C_{14}$ enthalten ist. Damit ist R besonders bevorzugt n-$C_{12}H_{25}$, n-$C_{14}H_{29}$ sowie insbesondere Mischungen davon.

Das Molverhältnis (I) zu (II) von 1 bis 3 bedeutet, dass bevorzugt die Verbindung (I) überwiegt, die insbesondere 50-75 Mol.-%, besonders bevorzugt 60-75 Mol.-% gegenüber 50-25 Mol-.% bzw. 40-25 Mol.-% (II) ausmacht.

Die erfindungsgemässen, neuen Gemische von Verbindungen (I) und (II) erweisen sich als vorteilhafte PVC-Stabilisatoren verglichen mit denen des Standes der Technik, insbesondere in Bezug auf Gleitmittelabhängigkeit. Damit kommen den erfindungsgemässen Stabilisatoren die Nachteile des Standes der Technik nicht oder nur in wesentlich geringerem Masse zu, was nicht vorhersehbar war.

Die neuen Gemische können nach an sich bekannten Methoden hergestellt werden, insbesondere gemäss der eingangs zitierten GP-PS 1 494 771, beispielsweise durch Umsetzung von Alkylestern der Thioglycolsäure der Formel $HSCH_2COOR$ mit einem Gemisch aus Monooctylzinnoxid oder Octylstannonsäure und Dioctylzinnoxid, in welchem der molare Anteil der Monooctylzinnverbindung 50-75 Mol.-% beträgt. Die Umsetzung kann mit oder ohne Lösungsmittel, durch Erhitzen der Komponenten und Entfernen des bei der Reaktion entstehenden Wassers durchgeführt werden.

Eine weitere Herstellmöglichkeit besteht in der Umsetzung des oben definierten Esters mit einem Gemisch aus Octylzinntrichlorid und Dioctylzinndichlorid, mit einem molaren Anteil an Octylzinntrichlorid von 50-75 %, in Gegenwart einer Base. Vorzugsweise wird die Reaktion in Gegenwart eines mit Wasser nicht mischbaren organischen Lösungsmittels ausgeführt, wie Kohlenwasserstoffen oder halogenierten Kohlenwasserstoffen, z. B. Toluol. Als Basen dienen z. B. Triäthylamin, wässrige Natronlauge oder wässrige Natriumbicarbonat-Lösung.

Die Ausgangsstoffe sind bekannt und handelsüblich.

Die neuen Stabilisator-Gemische können chlorhaltigen Thermoplasten in den üblichen Mengen zugegeben werden. Vorzugsweise werden 0,01 bis 10, besonders 0,1 bis 5 und insbesondere 0,2 bis 2 Gew.-% bezogen auf den chlorhaltigen Thermoplasten einverleibt.

Als chlorhaltige Thermoplaste werden bevorzugt Vinylchloridpolymere- oder Copolymere verwendet. Bevorzugt sind Suspensions- und Massenpolymere und ausgewaschene, also emulgatorarme Emulsionspolymere. Als Comonomere für die Copolymerisate kommen z. B. in Frage : Vinylidenchlorid, trans-Dichloräthen, Aethylen, Propylen, Butylen, Maleinsäure, Acrylsäure, Fumarsäure, Itaconsäure.

Weitere geeignete Polymere sind nachchlorierte Polyolefine.

Die Herstellung der stabilisierten Thermoplaste kann nach bekannten Verfahren erfolgen durch Einarbeiten der erfindungsgemässen Stabilisator-Gemische und gegebenenfalls weiterer Stabilisatoren in das Polymerisat. Eine homogene Mischung von Stabilisator und PVC kann z. B. mit Hilfe eines Zweiwalzenmischers bei 150-210 °C erzielt werden. Je nach dem Verwendungszweck der Formmasse können vor oder mit der Einarbeitung der Stabilisatoren auch weitere Zusätze eingearbeitet werden, wie Gleitmittel, bevorzugt Montanwachse oder Glycerinester, Weichmacher, Füllstoffe, Modifikatoren, wie etwa Schlagzäh-Zusätze, Pigmente, Lichtstabilisatoren, UV-Absorber, Antioxidantien oder weitere Costabilisatoren wie z. B. Phosphite oder epoxidierte Fettsäureester. Es können ferner die Metallsalze von Barium, Strontium, Kalzium, Zink, Kadmium, Blei, Zinn und Magnesium mit Phenolen oder Carbonsäuren (Fettsäuren, epoxidierte Fettsäuren) mitverwendet werden. Als besonders günstig haben sich Mischungen von Kalzium- und Zinkcarboxylaten erwiesen, in denen die Carboxylatgruppe 8 bis 20 C-Atomen aufweisen kann. Die Thermoplaste können nach den dafür gebräuchlichen Formgebungsverfahren, z. B. durch Extrusion, Spritzgiessen oder Kalandrieren zu Formteilen verarbeitet werden.

Die folgenden Beispiele erläutern die Erfindung ohne sie einzuschränken.

## Beispiel 1

Ein Gemisch aus
236,8 g (0,70 Mol) n-Octylzinntrichlorid,
124,8 g (0,30 Mol) Di-n-octylzinndichlorid,
779,0 g (2,70 Mol) Thioglycolsäuretetradecylester

wird in 500 ml Toluol gelöst. Unter kräftigem Rühren wird sodann innerhalb 1 Stunde eine Lösung von 108,0 g (2,70 Mol) Aetznatron in 300 ml Wasser zugetropft, wobei die Temperatur auf 50 °C gehalten wird. Nach Beendigung der Zugabe wird noch 20 Minuten lang gerührt. Von der organischen Phase wird Toluol zusammen mit restlichem Wasser abdestilliert. Nach der Filtration über ein Filterhilfsmittel (Celite) wird das Produkt als hellgelbe Flüssigkeit in einer Ausbeute von 1 032 g (99 % d. Th.) erhalten.

| Analyse : | % Sn | % S |
|---|---|---|
| gefunden | 11,3 | 8,2 |
| berechnet | 11,4 | 8,3 |

Das Produkt (Stabilisator 1) ist ein Gemisch aus

70 Mol.-% n-Octyl-Sn-$(SCH_2COO\text{-}C_{14}\text{-}H_{29})_3$ und
30 Mol.-% (n-Octyl)$_2$-Sn-$(SCH_2COO\text{-}C_{14}H_{29})_2$.

## Beispiel 2

a) Thioglycolat-Ausgangsstoff

285,5 g (3,1 Mol) frisch destillierte Thioglycolsäure mit einem SH-Wert von 35,9 %,
610,8 g (3,0 g-äquivalente) eines Alkoholgemisches, bestehend aus
64,0 Gew.-% Tetradecanol,
33,0 Gew.-% Dodecanol,
1,5 Gew.-% Decanol und
1,5 Gew.-% Hexadecanol sowie
2 g p-Toluolsulfonsäure

werden in 800 ml Toluol gelöst. Anschliessend wird die Mischung unter Argon zum Rückfluss erhitzt und das entstehende Wasser mit Hilfe eines Abscheiders entfernt. Nach Beendigung der Reaktion und Abkühlung wird die Lösung einmal mit 5 %iger Natriumbicarbonat-Lösung und dreimal mit destilliertem Wasser ausgewaschen. Nach dem Abdestillieren des Toluols wird das Reaktionsprodukt als farblose Flüssigkeit in einer Ausbeute von 828 g (99,4 % d. Th.) erhalten. Der SH-Wert beträgt 11,8 Gew.-% (berechnet 11,91 Gew.-%). Das Produkt hat die folgende Zusammensetzung :

60,8 Mol.-% Thioglycolsäuretetradecylester
36,1 Mol.-% Thioglycolsäuredodecylester
1,9 Mol.-% Thioglycolsäuredecylester
1,2 Mol.-% Thioglycolsäurehexadecylester

b) Octylzinn-Verbindungsgemisch

Ein Gemisch aus

165,6 g (0,647 Mol) Monooctylzinnoxid und
127,5 g (0,353 Mol) Dioctylzinnoxid, mit einem Sn-Gehalt von 40,5 %, wird mit
735,1 g (2,647 g-äquivalent) des Esters aus Beispiel 2a versetzt.

Unter Rühren wird 1 Stunde bei 13 mbar auf 100 °C erhitzt, wobei entstehendes Reaktionswasser abgezogen wird. Nach der Filtration wird das Reaktionsprodukt in einer Ausbeute von 994,5 g (99 % d. Th.) als hellgelbe Flüssigkeit erhalten.

| Analysenwerte : | %Sn | %S |
|---|---|---|
| gefunden | 11,6 | 8,2 |
| berechnet | 11,81 | 8,45 |

Das Produkt (Stabilisator 2) ist ein Gemisch aus

64,7 Mol.-% n-Octyl-Sn-$(SCH_2COO\text{-}C_{10\text{-}16}H_{21\text{-}33})_3$
und
35,3 Mol.-% $(n\text{-Octyl})_2$-Sn-$(SCH_2COO\text{-}C_{10\text{-}16}H_{21\text{-}33})_2$.

## Beispiel 3

Zu Prüfung der thermostabilisierenden Wirkung wird ein Dryblend, bestehend aus 100 Teilen S-PVC vom K-Wert 60, 0,2 Teilen Montanwachs, 1,0 Teilen eines inneren Gleitmittels, wie in den Tabellen angegeben, sowie einem Organozinnstabilisator in einer Einsatzmenge von 1 Teil auf 100 Teile PVC (siehe Tabelle 1) bzw. entsprechend einer Zinnmenge von 0,158 g Sn pro 100 g PVC (siehe Tabelle 2) auf einem Laborwalzwerk bei 200 °C gewalzt (Teile sind Gewichtsteile). Zur Bestimmung der Wirkung werden in Abständen von 3 Minuten Folienstücke entnommen und der Vergilbungsgrad mittels des Yellowness-Index (YI) nach ASTM D 1925-70 bestimmt. Die Ergebnisse der Messungen sind in den Tabellen 1 und 2 aufgeführt.

Tabelle 1

Hitzetest : dynamisch, Walztemperatur 200 °C, Folienstärke 0,3 mm

Grundrezeptur : Vestolit® S 6058 (S-PVC, K-Wert 60) 100 Teile, Wachs E (Montanwachs) 0,2 Teile

| Testsubstanzen | | Gleitmittel 1,0 Teil | Vergilbung (YIn. ASTM D 1925-70) und Belastungszeit (Minuten) | | | | | |
|---|---|---|---|---|---|---|---|---|
| | | | 3 | 6 | 9 | 12 | 15 | 18 |
| Stabilisator 1 | 1,0 Teile | Loxiol® G 10 | 4,9 | 7,0 | 12 | 24 | 46 | 77 |
| Beispiel 1, GB-PS 1.494.771 | 1,0 Teile | Loxiol® G 10 | 4,8 | 7,6 | 15 | 35 | 68 | 95 |

Tabelle 2

Hitzetest : dynamisch, Walztemperatur 200 °C, Folienstärke 0,3 mm

Grundrezeptur : Vestolit® S 6058 (S-PVC, K-Wert 60) 100 Teile, Wachs E (Montanwachs) 0,2 Teile

| Testsubstanzen | | Gleitmittel 1,0 Teil | Vergilbung (YIn. ASTM D 1925-70) und Belastungszeit (Minuten) | | | | | | | |
|---|---|---|---|---|---|---|---|---|---|---|
| | | | 3 | 6 | 9 | 12 | 15 | 18 | 21 | 24 |
| Stabilisator 1 | 1,40 Teile | Loxiol® G 10 | 4,5 | 6,1 | 9,3 | 14 | 28 | 48 | 73 | 90 |
| Beispiel 1, GB-PS 1.494.771 | 1,44 Teile | Loxiol® G 10 | 4,7 | 6,7 | 11 | 25 | 55 | 77 | 92 | |

## Ansprüche

1. Gemische von n-Octylzinn-Verbindungen (I) und (II)

$$n\text{-}C_8H_{17}Sn(SCH_2COOR)_3 \quad (I)$$

$$(n\text{-}C_8H_{17})_2Sn(SCH_2COOR)_2 \quad (II)$$

worin R Alkyl mit 10-16 C-Atomen ist, und das Molverhältnis (I) zu (II) ein Wert von 1 bis 3 ist.

2. Gemische nach Anspruch 1, dadurch gekennzeichnet, dass R $n-C_{12}-H_{25}$, $n-C_{14}H_{29}$ oder Gemische davon bedeutet.

3. Gemische nach Anspruch 1, dadurch gekennzeichnet, dass R mindestens 60 Mol.-% aus $n-C_{14}-H_{29}$ enthält.

4. Gemische nach Anspruch 1, dadurch gekennzeichnet, dass Verbindungen (I) zu 60-75 Mol.-%, Verbindungen (II) zu 40-25 Mol.-% enthalten sind.

5. Verwendung von Gemischen nach Anspruch 1 als Thermostabilisatoren für halogenhaltige Thermoplaste.

6. Stabilisierte halogenhaltige Thermoplaste, enthaltend ein Gemisch nach Anspruch 1.

7. Verfahren zur Herstellung von Gemischen nach Anspruch 1, gekennzeichnet durch Umsetzung von Alkylestern der Thioglycolsäure der Formel $HSCH_2COOR$ mit einem Gemisch aus Monooctylzinnoxid oder Octylstannonsäure und Dioctylzinnoxid, in welchem der molare Anteil der Monooctylzinnverbindung 50-75 Mol.-% beträgt, oder durch Umsetzung von Alkylestern der Thioglycolsäure der Formel $HSCH_2COOR$ mit einem Gemisch aus Octylzinntrichlorid und Dioctylzinndichlorid, mit einem molaren Anteil an Octylzinntrichlorid von 50-75 %, in Gegenwart einer Base.

**Claims**

1. A mixture of n-octyltin compounds of the formulae (I) and (II)

$$n-C_8H_{17}Sn(SCH_2COOR)_3 \quad (I)$$

$$(n-C_8H_{17})_2Sn(SCH_2COOR)_2 \quad (II)$$

wherein R is alkyl of 10 to 16 carbon atoms and the molar ratio of (I) to (II) is 1 to 3.

2. A mixture according to claim 1, wherein R is $n-C_{12}H_{25}$, $n-C_{14}H_{29}$ or a mixture thereof.

3. A mixture according to claim 1, wherein R contains at least 60 mole-% of $n-C_{14}H_{29}$.

4. A mixture according to claim 1, which contains 60-75 mole-% of compound (I) and 40-25 mole-% of compound (II).

5. Use of a mixture according to claim 1 as heat stabiliser for halogen-containing thermoplastics.

6. A stabilised halogen-containing thermoplastic which contains a mixture according to claim 1.

7. A process for obtaining a mixture according to claim 1, which process comprises reacting an alkyl ester of thioglycollic acid of the formula $HSCH_2COOR$ with a mixture of monooctyltin oxide or octylstannonic acid and dioctyltin oxide, said mixture containing 50-75 mole-% of the monooctyltin compound, or reacting an alkyl ester of thioglycollic acid of the formula $HSCH_2COOR$ with a mixture of octyltin trichloride and dioctyltin dichloride, said mixture containing 50-75 mole-% of octyltin trichloride, in the presence of a base.

**Revendications**

1. Mélanges de composés n-octylstanniques de formules I et II

$$n-C_8H_{17}Sn(SCH_2COOR)_3 \quad (I)$$

$$(n-C_8H_{17})_2Sn(SCH_2COOR)_2 \quad (II)$$

dans lesquelles R représente un radical alkyle contenant de 10 à 16 atomes de carbone, le rapport molaire du composé (I) au composé (II) étant compris entre 1 et 3.

2. Mélanges selon la revendication 1 caractérisés en ce que R représente un radical $n-C_{12}H_{25}$, un radical $n-C_{14}H_{29}$ ou un mélange de ces radicaux.

3. Mélanges selon la revendication 1 caractérisés en ce que R contient au moins 60 % en moles de $n-C_{14}H_{29}$.

4. Mélanges selon la revendication 1 caractérisés en ce qu'ils contiennent des composés (I) en une proportion de 60 à 75 % en moles et des composés (II) en une proportion de 40 à 25 % en moles.

5. Application de mélanges selon la revendication 1 comme stabilisants à la chaleur pour des matières thermoplastiques contenant un halogène.

6. Matières thermoplastiques halogénées stabilisées qui contiennent un mélange selon la revendication 1.

7. Procédé de préparation de mélanges selon la revendication 1, caractérisé en ce qu'on fait réagir des thioglycolates d'alkyles de formule $HSCH_2COOR$ avec un mélange d'oxyde de mono-octyl-étain ou d'acide octyl-stannonique et d'oxyde de dioctyl-étain dans lequel la proportion molaire du composé mono-octyl-stannique est de 50 à 75 % en moles, ou en ce qu'on fait réagir des thioglycolates d'alkyles de formule $HSCH_2COOR$ avec un mélange de trichlorure d'octyl-étain et de dichlorure de dioctyl-étain dans lequel la proportion molaire du trichlorure d'octyl-étain est de 50 à 75 % en moles, en présence d'une base.